# EUROPEAN PATENT APPLICATION

(11) **EP 1 568 511 A2**
(43) Date of publication of application: **31.08.2005**
(21) Application number: 05003658.1
(22) Date of filing: 21.02.2005
(51) Int. Cl.: B60B 7/00

(54) **Wheel cover for trolleys preferably for domestic use**

(30) Priority: 27.02.2004 IT GE20040016
(71) Applicant: Romano, Armando, 16154 Genova (GE) (IT)
(72) Inventor: Romano, Armando, 16154 Genova (GE) (IT)
(74) Representative: Sergio, Stefano

(57) **Abstract**

Wheel cover for trolleys preferably for domestic use, which envisages a cover or protection made up of an external body (1) of ring shape, internally concave and fitted with at least one lateral opening (3) and fitted with means (4, 5, 6, 7) that allow the dilation of the opening (3) for the mounting and removal of the wheel cover (1) on/from the wheel (2) to be protected, as well as contracting said opening in order to obtain the stable mounting of the wheel cover (1) on the wheel (2) during movement of the trolley.

## Description

Pushchairs and prams for small children and newborn babies, which are mobile generally on four wheels or four pairs of wheels that run on the ground, are well known. Trolleys for shopping and the transport of products are also well known, as are suitcases that envisage wheels to facilitate their movement.

All these mobile means are generally kept at home and when needed cover stretches of road that can be either short or long.

As is also well known the roads, pavements, gardens, etcetera, generally used by said mobile means, normally present the excrements of dogs, pigeons and other animals, that may be infected and contain other harmful products, such as for instance deposits of dust from combustion. There follows the serious inconvenience that the wheels of said mobile means are regularly more or less covered with harmful and polluting products. These harmful and polluting products are normally brought home upon return, in that it is not normal to carry out a cleaning or scraping of the wheels, with the possibility of infecting adults and more especially children.

The aim of this invention is that of avoiding that the wheels of said mobile means can create harmful or infectious effects inside homes. This aim is reached with the fact that said wheels are fitted with disposable, external protections or covers, that externally cover and particularly around their circumference, said wheels that are thus protected from contact with harmful or infectious products lying on the routes to be followed. These protections or external covers which function as wheel covers are preferably available in multiple packs, mounted before going out and removed upon returning home and then thrown into the rubbish preferably placed in closable bags.

These protections or covers are shaped in various ways so as to make their use practical on wheels of any type, bearing in mind that such wheels are generally placed singly or double on each supporting shaft.

These protections or covers may be made of elastic material conveniently coated with plastic and made water proof or of plastic material, or of a poorly elastic fabric conveniently made resistant and plastic coated.

Furthermore, as will be clarified in the following as an example, these protections or covers have at least one or both of the lateral surfaces fitted with an opening so that the protection or the cover may be easily mounted on and removed from the wheels by slipping them over and by lateral removal. For instance, the protections with an opening on both sides may have one or both of the edges of said openings dilatable shaped with elastic material or the protections with just one opening may have the edge of the same in elastic material. The elastic edge allows one to use the dilation to pass over the circumference of the wheel to sit elastically around and surround the wheel's circumference. In order to place the protections on double wheels on a single shaft, it is necessary to have coverings with the edges of both the opening elastically dilatable in such way as to pass over the external wheel with the protection and cover the internal wheel.

In a further solution according to the invention, the protection or cover of the wheels is essentially in a rigid material and has on the edges of at least one of the lateral openings, means that allow the dilation of the opening for the passing over the circumference of the wheel, to then sit stably due to successive contraction around the wheel itself. These means of dilation and contraction may be drawstrings threaded and moveable in a channel or inside subsequent holes or eyelets.

In a further solution, the cover for single wheels may have on the external side a full wall, while on the internal side it has an opening that allows the mounting of the protection on the wheel. The internal opening is fitted, as clarified above, with an elastic system or system of drawstrings for fixing.

Another solution envisages that the external edge of one or both of the lateral openings has Velcro needles, which allow the pulling and fixing of the cover by means of straps that are also fitted with Velcro needles.

The invention described in writing here is clarified in some of its example realisations in the attached drawing where:
Fig. 1 shows a perspective view of a wheel cover with at least one opening that can be elastically tightened,
Fig. 2 shows a lateral and partial cross-section view of a wheel fitted with a protection as per Fig. 1,
Fig. 3 shows a perspective view of a wheel cover with at least one opening that can be tightened by means of a drawstring threaded into a channel peripheral to the opening,
Fig. 4 shows a perspective view of a protection with at least one opening that can be tightened with a drawstring threaded into holes or eyelets,
Fig. 5 shows the example protection fitted with just one lateral opening that is for instance dilatable and that can be tightened elastically,
Fig. 6 shows the lateral and partial cross-section view of the wheel fitted with the protection of Fig. 5,
Fig. 7 shows the frontal view of a protection fixed by means of straps with the Velcro system.

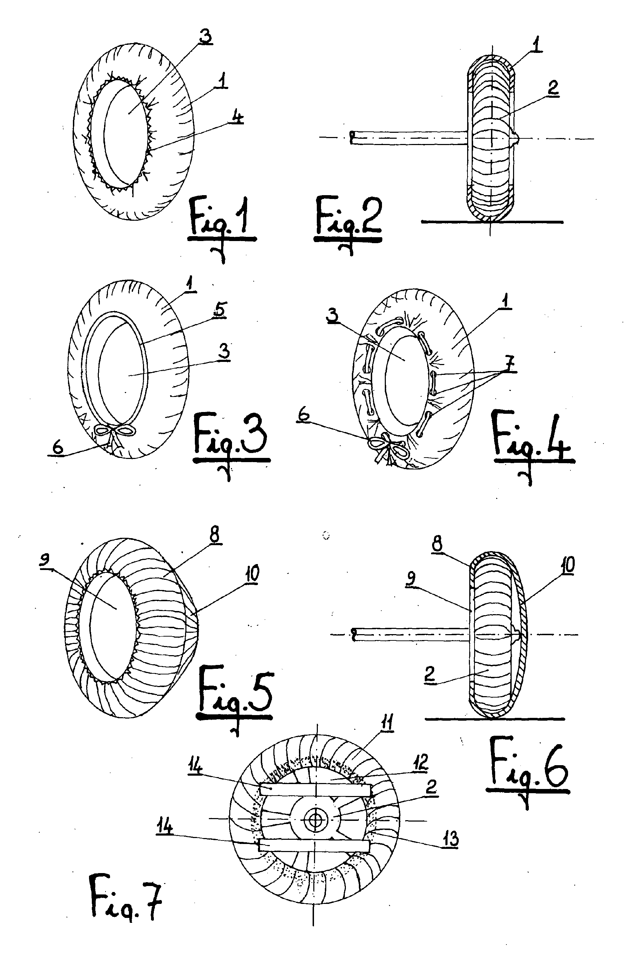

With reference to said drawings, Figs. 1 and 2 show the example protection 1 of the wheel 2, where said protection shows a ring shaped external body internally hollow and fitted with at least one lateral opening 3 useful to allow the passage of the wheel inside the protection and where such protection is of a conveniently rigid material, while the opening is formed of a band edge 4 of elastic material such as to allow dilation of the opening during mounting and removal and contraction of the opening during use of the protection on the wheel.

In Fig. 3 the protection 1 has at least one lateral opening 3 fitted along the edge of a small channel 5 into which a drawstring 6 is threaded useful to allow the dilation of the opening for mounting and removal and its contraction in order to close said opening on the wheel. In the contraction the extremities of the drawstring are pulled and blocked with a knot or any other mechanical means of blocking.

In Fig. 4 a protection of the wheels is illustrated similar to that of Fig. 3 with which however the drawstring 6 is threaded into holes or eyelets 7. All the protections described may have an opening on one side or even an opening on the other side and said second opening is essential with double wheels on the same shaft so the protection of the internal wheel must pass over the external wheel.

In Figs. 5 and 6 an example protection 8 for single wheels is indicated in which just one opening 9 is envisaged, while on the other side there is no opening but a continual wall 10 is envisaged preferably with a shape that is slightly convex.

Finally in Fig. 7 the lateral view of a protection 11 of the wheel 2 is shown, having on the edge of one or both of the openings 12 needles 13 of the system of union of Velcro type by means of straps 14 or other Velcro organs of union.

All said protections for the wheels may be made in plastic material conveniently resistant or of non-deformable fabric or slightly deformable conveniently made water proof as also in all or in part of the elastic material made water proof.

The protections subject of this patent may also take on other shapes on the basis of the various types of wheels used for prams, pushchairs, shopping and transport trolleys, as well as for suitcases that have wheels or pairs of wheels to help with their movement.

According to the invention multiple packs are envisaged to present to the public series of protections of the type individually needed, from which the individual protections are removed to be mounted before going out. Upon returning home said protections for the wheels are removed and conveniently may be placed in closable bags for their elimination as rubbish.

## Claims

1. Wheel cover for trolleys preferably for domestic use, **characterised by** that which envisages a cover or protection formed by an external body (1) of ring shape, internally hollow and fitted with at least one lateral opening (3) and fitted with means (4, 5, 6, 7) that allow the dilation of the opening (3) for mounting and removal of the wheel cover (1) onto/from the wheels (2) to be protected, as well as contracting said opening in order to obtain the stable mounting of the wheel cover (1) on the wheel (2) during movement of the trolley.

2. Wheel cover according to claim 1, **characterised by** the fact that the body (1) has two lateral openings (3) for the mounting of the protection on pairs of wheels (2) placed on a single support shaft.

3. Wheel cover according to claim 1, **characterised by** the fact that the means that allow the dilation and contraction of the lateral opening (3), are made up of edges or bands (4) of elastically deformable material connected to the body (1).

4. Wheel cover according to claim 1, **characterised by** the fact that the means that allow the dilation and contraction of the lateral opening (3), are made up of a drawstring (6) threaded into a small channel (5) envisaged along the edge of the opening (3).

5. Wheel cover according to claim 1, **characterised by** the fact that the dilation and contraction of the lateral opening (3) are made up of a drawstring (6) threaded into holes or eyelets (7) envisaged on the edge of the opening (3).

6. Wheel cover according to claim 1, **characterised by** the fact that the lateral surface opposite the opening (9) of the cover (8) is a full wall (10) preferably with a slightly convex shape.

7. Wheel cover according to claim 1, **characterised by** the fact that the protection (11) has on the edge of one or both of the openings (12), needles (13) of Velcro type that allow the fixing of the wheel cover (11) by means of straps or other Velcro means (14).

8. Wheel cover according to claim 1, **characterised by** the fact that it is made of conveniently resistant plastic material or of non-deformable fabric or slightly deformable conveniently made water proof, or of elastically deformable material, or of a combination of said materials.

9. Wheel cover according to claim 1, **characterised by** the fact that it is available in multiple packs presenting the public with a series of protections of the type individually needed.

10. Wheel cover according to claim 1, **characterised by** the fact that it is mounted before going out with the trolley, removed upon return to the home and thrown in the rubbish preferably placed in closable bags.
